# EUROPÄISCHE PATENTSCHRIFT

(11) **EP 3 186 130 B1**
(45) Veröffentlichungstag und Bekanntmachung des Hinweises auf die Patenterteilung: **30.09.2020**
(21) Anmeldenummer: 15745448.9
(22) Anmeldetag: 29.07.2015
(51) Int. Cl.: B62B 13/18, B62B 15/00, B62K 27/00, B62B 19/04

(54) **VORRICHTUNG ZUM ANBRINGEN VON SKI AN EINEM FAHRRADANHÄNGER**
DEVICE FOR FASTENING SKIS TO A BICYCLE TRAILER
DISPOSITIF PERMETTANT DE POSER DES SKIS SUR UNE REMORQUE DE BICYCLETTE

(30) Priorität: 27.08.2014 DE 102014112327
(43) Veröffentlichungstag der Anmeldung: 05.07.2017
(73) Patentinhaber: Croozer GmbH, 50354 Hürth (DE)
(72) Erfinder: GEHLEN, Andreas, 50829 Köln (DE)
(74) Vertreter: Lenzing Gerber Stute
(86) Internationale Anmeldenummer: PCT/EP2015/067397
(87) Internationale Veröffentlichungsnummer: WO 2016/030116

(56) Entgegenhaltungen:
- EP-A2- 0 149 953
- WO-A1-2009/067818
- FR-A1- 2 989 593
- JP-U- S4 710 674
- US-A- 5 308 096
- US-A1- 2007 216 118
- US-A1- 2013 069 327

## Beschreibung

Die vorliegende Erfindung betrifft eine Vorrichtung zum Befestigen eines Skis an einem Fahrradanhänger, mit Mitteln zum Befestigen der Vorrichtung am Fahrradanhänger sowie einem ein skiseitiges Anschlussstück und die Befestigungsmittel fest verbindenden Beinabschnitt, ein Set solcher Vorrichtungen sowie einen damit ausgestatteten Fahrradanhänger.

Fahrradanhänger sind in vielfältigen Ausführungen bekannt. Sie weisen in aller Regel ein Chassis auf, an dem zwei Laufräder aufgehängt sind und das eine Deichsel trägt. Außerdem trägt das Chassis eine Fahrgastzelle.

Fahrradanhänger sind insbesondere in ihrer Ausführung zum Transport von Kindern beliebt, da sie den Aktionsradius von Eltern erweitern, die zusammen mit kleineren Kindern lange Fahrradtouren machen können, ohne damit die Kinder zu überfordern.

Die Funktionalität von Kinderfahrradanhängern wurde in den letzten Jahren noch dadurch erweitert, dass es möglich wurde, die Deichsel abzubauen und zusätzlich zu den beiden Laufrädern ein oder zwei weitere Räder anzubauen und einen Schiebegriff vorzusehen, so dass der Fahrradanhänger als Kinderwagen oder als sogenannter Jogger genutzt werden kann. Auch sind solche Fahrradanhänger in aller Regel zusammenfaltbar und die Räder abnehmbar, so dass sie besser transportiert werden können.

Aus der WO 2009/067818 ist ein Multifunktions-Fahrradanhänger, sowie ein Set von Ski bekannt, welches an dem betreffenden Fahrradanhänger angebracht ist. Ein Nachteil des gezeigten Sets von Ski ist, dass die Ski speziell für den Kinderwagen gestaltet sind und für keinen anderen Zweck genutzt werden können. Des Weiteren können nur diese Ski, die zusätzlich erworben werden müssen, an dem Fahrradanhänger verwendet werden.

Ferner ist aus der FR 2 989 593 A1 ein Transportschlitten beispielsweise zum Schieben einer verletzten Person auf Schnee bekannt. Der Transportschlitten weist Ski auf, die über lösbare Verbindungmechanismen befestigt sind. Aus der EP 0 149 953 A2 ist ein Schlitten bekannt, der ein Verbindungsstück zur Bindung an eine Standartbindung eines Skis nutzt.

Eine Aufgabe der vorliegenden Erfindung besteht darin, die Verwendungsmöglichkeit von Fahrradanhängern auf einfache und kostengünstige Weise zu erweitern.

Diese Aufgabe wird mit einer Vorrichtung zum Befestigen eines Skis an einem Fahrradanhänger gemäß Anspruch 1 gelöst. Die Vorrichtung ist dadurch gekennzeichnet, dass das skiseitige Anschlussstück in der Art einer Skischuhsohle mit einem vorderen und einem hinteren Einsetzteil für das Einsetzen in den vorderen und den hinteren Backen einer genormten Sicherheitsbindung für Abfahrtskier ausgebildet ist, und dass die Befestigungsmittel einen Achszapfen aufweisen, der geeignet ist, in einer Achsaufnahme des Fahrradanhängers aufgenommen zu werden.

Mit einer solchen Vorrichtung können die Laufräder eines Fahrradanhängers ausgetauscht werden gegen ein Paar Abfahrtsski, so dass der Fahrradanhänger stabile Gleitkufen erhält. Wird an einem Fahrradanhänger ein Zuggeschirr für eine Person befestigt, ergibt sich somit für Langlaufskifahrer die Möglichkeit, die Kinder bei ihrem Sport im Fahrradanhänger mitzunehmen. Auch kann der Fahrradanhänger mit Schiebegriff so zu einem im Schnee verwendbaren Schubfahrzeug umgebaut werden.

Das skiseitige Anschlussstück in der Art einer Skischuhsohle ermöglicht dabei zum einen eine sichere Halterung des Skis an der Vorrichtung über die Sicherheitsbindung. Zum anderen wird durch die Normierung der Sicherheitsbindung, hier insbesondere die DIN ISO 9462, und der dadurch bedingten normierten Ausführung der vorderen und hinteren Enden einer Skischuhsohle gewährleistet, dass die erfindungsgemäße Vorrichtung mit jeder Art von Ski verwendet werden kann, sofern er mit einer standardisierten Sicherheitsbindung für Abfahrtskier ausgestattet ist. Dies trifft weitestgehend auf jeden in den letzten Jahrzehnten im Markt erhältlichen Abfahrtsski zu. Abfahrtski geben dem Fahrradanhänger eine ausreichend breite Aufstandsfläche bei vergleichsweise geringem Reibungswiderstand.

Ein weiterer Vorteil ergibt sich daraus, dass keine Ski oder andere Arten von Gleitkufen speziell für den Fahrradanhänger beschafft werden müssen. Vielmehr können vorhandene, gebrauchte oder schon abgelegte Ski zum Einsatz kommen.

Die Befestigungsmittel weisen einen Achszapfen auf, der geeignet ist, in einer Achsaufnahme des Fahrradanhängers aufgenommen zu werden.

Diese Ausgestaltung kann noch dadurch verbessert werden, dass der Achszapfen einen Schnellverschluss zum Verriegeln des Achszapfens in der Achsaufnahme aufweist, der durch Betätigen eines Druckknopfs an der äußeren Stirnseite des Achszapfens ausgelöst werden kann. Ein Beispiel für eine derartige Ausgestaltung des Achszapfens ist unter dem Namen Push Button Achse bekannt. Die Push Button Achse weist an ihrem einzusteckenden Ende radial herausstehende Sperrkugeln auf, die nach dem Einsetzen des Achszapfens in die Achsaufnahme in eine darin eingebrachte Nut, Hinterschneidung oder dergleichen eingreifen und so die Achse gegen ein Herausziehen sperren. Zum Lösen der Sperrkugeln muss eine sogenannte Staubkappe, die am Laufradseitigen Ende der Achse angeordnet ist, betätigt werden, so dass die Achse wieder aus der Achsaufnahme herausgenommen werden kann.

Somit wird es möglich, die Vorrichtung mit ähnlichen Mitteln und ähnlich komfortabel am Fahrradanhänger zu befestigen, wie auch abnehmbare Räder an Fahrradanhängern befestigt werden. Die Fixierung der Vorrichtung in einer Achsaufnahme am Fahrradanhänger ist vollkommen ausreichend, auch wenn der Fahrradanhänger, genauso wie bei montierten Rädern, etwas nach vorn oder hinten kippen kann, bis er mit seinem vorderen oder hinteren Teil des Chassis auf dem Boden aufsetzt.

In einer weiteren bevorzugten Ausgestaltung der erfindungsgemäßen Vorrichtung weist das skiseitige Anschlussstück eine rutschfeste Aufstandsfläche auf, die einem seitlichen Herausschwenken des vorderen Einsetzteils aus der Sicherheitsbindung entgegenwirkt. Anders als bei den Sohlen von Skischuhen, bei denen die Aufstandsfläche der Sohle insbesondere im vorderen Bereich glatt ausgebildet sein soll, damit ein leichtes Auslösen der vorderen Sicherheitsbindung quer zur Längsrichtung des Skis möglich wird, ist es für den Betrieb mit einem Fahrradanhänger wichtiger, dass die Sicherheitsbindung selbst bei höheren Querkräften bzw. daraus resultierenden Momenten auf den Ski nicht auslöst.

In noch einer bevorzugten Ausgestaltung der Erfindung steht der Beinabschnitt in einem im Wesentlichen rechten Winkel zur Aufstandsfläche des skiseitigen Anschlussstücks. Hierdurch werden Gewichtskräfte möglichst direkt von dem Fahrradanhänger in den Ski eingeleitet. Dementsprechend ist es ebenso von Vorteil, wenn der Beinabschnitt in einem im Wesentlichen rechten Winkel quer zur Längsausrichtung des skiseitigen Anschlussstücks steht.

Als Werkstoffe für den Beinabschnitt sowie die Befestigungsmittel kommen insbesondere metallische Werkstoffe, insbesondere Aluminium oder Stahl, Glasfaserwerkstoffe, Kohlefaserwerkstoffe oder Kompositmaterialien aus einer Kombination zweier oder mehr der genannten Werkstoffe in Betracht.

Bei einem Set aus zwei der erfindungsgemäßen Vorrichtungen kann es sinnvoll sein, die Beinabschnitte beider Vorrichtungen mit einer Querstrebe zur Stabilisierung der Beinabschnitte zu verbinden.

Im Folgenden wird die Erfindung anhand von Figuren, die ein einfaches Ausführungsbeispiel der erfindungsgemäßen Vorrichtung zeigen, näher erläutert.

Es zeigen
- Fig. 1: eine Seitenansicht der erfindungsgemäßen Vorrichtung;
- Fig. 2: eine Aufsicht auf die in Figur 1 dargestellte erfindungsgemäße Vorrichtung; und
- Fig. 3: eine Rückansicht der in Fig. 1 dargestellten Vorrichtung.

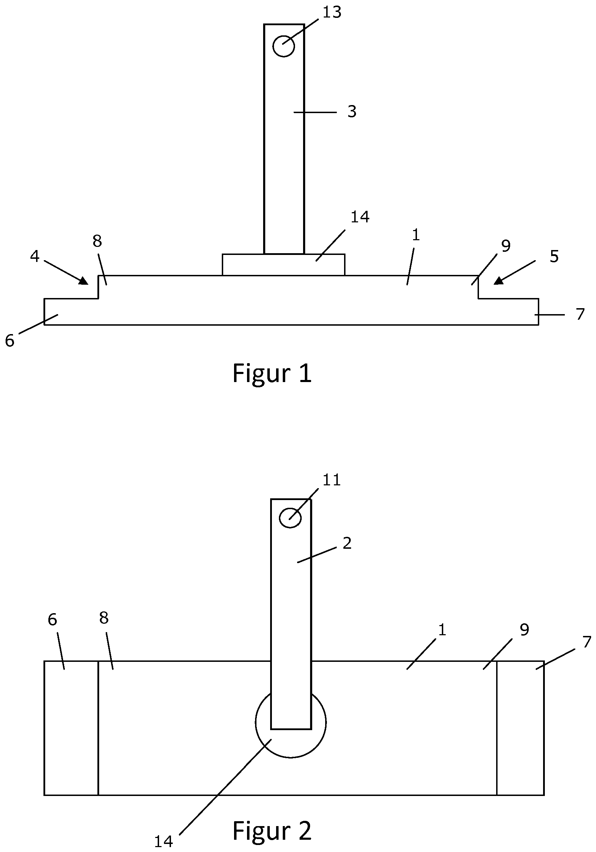

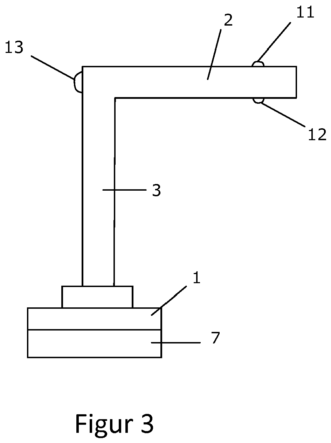

Die in den Figuren 1 bis 3 dargestellte Vorrichtung weist ein skiseitiges Anschlussstück 1, einen Achszapfen 2 als Mittel zum Befestigen der Vorrichtung am Fahrradanhänger und einen das Anschlussstück 1 und den Achszapfen 2 verbindenden Beinabschnitt 3.

Das skiseitige Anschlussstück ist in der Art einer Skischuhsohle ausgebildet und besteht aus einer Platte mit im Wesentlichen rechtwinkligem Querschnitt mit einem vorderen Einsetzteil 4 und einem hinteren Einsetzteil 5, mit denen das skiseitige Anschlussteil in eine genormte Sicherheitsbindung für Abfahrtski eingesetzt werden kann. Die Einsetzteile weisen jeweils einen unteren Steg 6, 7 und eine daran angesetzte Schulter 8, 9 auf, die mit dem vorderen und hinteren Teil einer Sicherheitsbindung zusammenwirken und mit denen das Anschlussstück von der Sicherheitsbindung fest am Ski gehalten werden kann.

Der Achszapfen 2 ist als Push Botton Achse ausgebildet und weist an seinem freien, in eine Achsaufnahme eines Fahrradanhängers einzusetzenden Ende Sperrkugeln 11, 12 auf, mit denen der Achszapfen 2 in der Achsaufnahme verrastet werden kann. Zum Lösen der Sperrkugeln 11, 12 ist eine Staubkappe 13 vorgesehen, bei deren Betätigung die Sperrkugel radial nach innen bewegbar sind.

Der Beinabschnitt steht senkrecht zur Aufstandsfläche des skiseitigen Anschlussstücks 1 und ist an seiner Unterseite über einen Anschlussflansch 14 mit dem skiseitigen Anschlussstück verbunden. Der Beinabschnitt kann insbesondere aus einem Vierkanthohlprofil oder aus einem Vierkantvollprofil gebildet sein.

An seiner Oberseite schließt sich der Achszapfen 2 an, der senkrecht zum Beinabschnitt 3 und quer zur Längsachse des skiseitigen Anschlussstücks 1 verläuft. Der Beinabschnitt 3 und der Achszapfen 2 können beide beispielsweise aus einem Stahl hergestellt und miteinander verschweißt sein.

## Patentansprüche

1. Vorrichtung zum Befestigen eines Skis an einem Fahrradanhänger, mit Mitteln zum Befestigen der Vorrichtung am Fahrradanhänger sowie einem ein skiseitiges Anschlussstück (1) und die Befestigungsmittel fest verbindenden Beinabschnitt (3), **dadurch gekennzeichnet, dass** das skiseitige Anschlussstück (1) in der Art einer Skischuhsohle mit einem vorderen und einem hinteren Einsetzteil (4,5) für das Einsetzen in den vorderen und den hinteren Backen einer genormten Sicherheitsbindung für Abfahrtskier ausgebildet ist, wobei die Befestigungsmittel einen Achszapfen (2) aufweisen, der geeignet ist, in einer Achsaufnahme des Fahrradanhängers aufgenommen zu werden.

2. Vorrichtung nach Anspruch 1, **dadurch gekennzeichnet, dass** der Achszapfen (2) einen Schnellverschluss zum Verriegeln des Achszapfens (2) in der Achsaufnahme aufweist, der durch Betätigen eines Druckknopfs an der äußeren Stirnseite des Achszapfens (2) ausgelöst werden kann.

3. Vorrichtung nach einem der vorstehenden Ansprüche, **dadurch gekennzeichnet, dass** das skiseitige Anschlussstück (1) eine rutschfeste Aufstandsfläche aufweist, die einem seitlichen Herausschwenken des vorderen Einsetzteils (4) aus der Sicherheitsbindung entgegenwirkt.

4. Vorrichtung nach einem der vorstehenden Ansprüche, **dadurch gekennzeichnet, dass** der Beinabschnitt (3) in einem im Wesentlichen rechten Winkel zur Aufstandsfläche des skiseitigen Anschlussstücks (1) steht.

5. Vorrichtung nach einem der vorstehenden Ansprüche, **dadurch gekennzeichnet, dass** der Beinabschnitt (3) sowie die Befestigungsmittel jeweils im Wesentlichen aus einem metallischen Werkstoff, insbesondere Aluminium oder Stahl, einem Glasfaserwerkstoff, einem Kohlefaserwerkstoff oder einem Kompositmaterial aus einer Kombination zweier oder mehr der genannten Werkstoffe besteht.

6. Set zweier Vorrichtungen nach einem der vorstehenden Ansprüche, **gekennzeichnet durch** eine Querstrebe zur Verbindung und Stabilisierung der Beinabschnitte (3) beider Vorrichtungen.

7. Fahrradanhänger mit zwei Vorrichtungen gemäß einem der Ansprüche 1 bis 5 oder einem Set zweier Vorrichtungen gemäß Anspruch 6 und einem daran befestigten Paar Ski.

## Claims

1. Device for fastening a ski to a bicycle trailer, having means for fastening the device to the bicycle trailer and a leg portion (3) which firmly connects a ski-side connecting piece (1) and the fastening means, **characterized in that** the ski-side connecting piece (1) is designed in the manner of a ski boot sole with a front and a rear insert part (4, 5) for being inserted in the front and rear jaws of a standardized safety binding for downhill skis, said fastening means comprising an axle journal (2) adapted to be received in an axle receptacle of the bicycle trailer.

2. The device according to claim 1, **characterized in that** the axle journal (2) has a quick-release lock for locking the axle journal (2) in the axle receptacle, which can be released by actuating a push button on the outer end face of the axle journal (2).

3. The device according to one of the above claims, **characterized in that** the ski-side connecting piece (1) has a non-slip contact surface which counteracts lateral swivelling of the front insert part (4) out of the safety binding.

4. The device according to one of the above claims, **characterized in that** the leg portion (3) is at a substantially right angle to the contact surface of the ski-side connecting piece (1).

5. The device according to one of the above claims, **characterized in that** the leg portion (3) as well as the fastening means each consist essentially of a metallic material, in particular aluminium or steel, a glass fibre material, a carbon fibre material or a composite material consisting of a combination of two or more of the said materials.

6. A set of two devices according to one of the preceding claims, **characterized by** a cross-brace for connecting and stabilizing the leg portions (3) of both devices.

7. Bicycle trailer with two devices according to one of claims 1 to 5 or a set of two devices according to claim 6 and a pair of skis attached to them.

## Revendications

1. Dispositif destiné à fixer un ski contre une remorque de bicyclette, avec des moyens pour fixer le dispositif contre la remorque de bicyclette, ainsi qu'une pièce de raccordement (1) du côté du ski et une partie de montant (3) reliant de façon rigide les moyens de fixation, **caractérisé en ce que** la pièce de raccordement (1) du côté du ski est conçue sous la forme d'une semelle de chaussure de ski avec une pièce rapportée (4, 5) avant et arrière pour rapporter dans la mâchoire avant et arrière une liaison de sécurité normée pour des skis de descente, dans lequel les moyens de fixation présentent un tourillon (2) qui est adapté pour être logé dans un logement d'axe de la remorque de bicyclette.

2. Dispositif selon la revendication 1, **caractérisé en ce que** le tourillon (2) présente une fermeture rapide pour verrouiller le tourillon (2) dans le logement d'axe, qui peut être libérée en actionnant un bouton-pressoir sur le côté frontal extérieur du tourillon (2).

3. Dispositif selon l'une des revendications précédentes, **caractérisé en ce que** la pièce de raccordement (1) du côté du ski présente une surface de résistance antidérapante qui contrecarre un pivotement latéral vers l'extérieur de la pièce rapportée (4) avant hors de la liaison de sécurité.

4. Dispositif selon l'une des revendications précédentes, **caractérisé en ce que** la partie de montant (3) se situe selon un angle essentiellement droit par rapport à la surface de résistance de la pièce de raccordement (1) du côté du ski.

5. Dispositif selon l'une des revendications précédentes, **caractérisé en ce que** la partie de montant (3), ainsi que les moyens de fixation, est fabriqué respectivement et essentiellement dans un matériau métallique, en particulier un aluminium ou un acier, dans un matériau en fibre de verre, dans un matériau en fibre de carbone ou dans un matériau composite issu d'une combinaison de deux ou plus des matériaux cités.

6. Jeu de deux dispositifs selon l'une des revendications précédentes, **caractérisé par** une traverse pour relier et stabiliser les parties de montant (3) des deux dispositifs.

7. Remorque de bicyclette avec deux dispositifs selon l'une des revendications 1 à 5 ou un jeu de deux dispositifs selon la revendication 6 et une paire de skis fixée contre eux.
